Europäisches Patentamt

European Patent Office

Office européen des brevets

(11) Veröffentlichungsnummer: **0 265 579**
**A1**

(12) **EUROPÄISCHE PATENTANMELDUNG**

(21) Anmeldenummer: 86890290.9

(51) Int. Cl.⁴: **B23D 37/00**

(22) Anmeldetag: 24.10.86

(43) Veröffentlichungstag der Anmeldung:
04.05.88 Patentblatt 88/18

(84) Benannte Vertragsstaaten:
AT DE FR GB IT

(71) Anmelder: GFM Gesellschaft für
Fertigungstechnik und Maschinenbau
Gesellschaft m.b.H.
Ennserstrasse 14
A-4403 Steyr(AT)

(72) Erfinder: Blaimschein, Gottfried, Dipl.-Ing.
Arnhalmweg 33
A-4407 Steyr(AT)

(74) Vertreter: Hübscher, Gerhard, Dipl.-Ing. et al
Patentanwälte Dipl.-Ing. Gerhard Hübscher
Dipl.-Ing. Helmut Hübscher Dipl.-Ing. Heiner
Hübscher Spittelwiese 7
A-4020 Linz(AT)

(54) **Räumverfahren und Räummaschine zur spanenden Rundbearbeitung rotationssymmetrischer Querschnitte.**

(57) Um ein rationelles Räumen rotationssymmetrischer Querschnitte zu ermöglichen, wird wenigstens ein Räumwerkzeug (8) einem zum Bearbeitungsquerschnitt tangential gerichteten Vorschub unterworfen und gleichzeitig auf einer zum Bearbeitungsquerschnitt konzentrischen Kreisbahn um das stillstehend gehaltene Werkstück herumbewegt.

FIG. 2

## Räumverfahren und Räummaschine zur spanenden Rundbearbeitung rotationssymmetrischer Querschnitte

Die Erfindung bezieht sich auf ein Räumverfahren zur spanenden Rundbearbeitung rotationssymmetrischer Querschnitte sowie auf eine Räummaschine zum Durchführen dieses Verfahrens.

Zur wirtschaftlichen Massenfertigung von Werkstücken mit rotationssymmetrischen Außenkonturen, insbesondere Kurbel-und Nockenwellen, findet bereits ein Räumverfahren, das sogenannte Drehräumverfahren, Verwendung, das bei kurzen Bearbeitungszeiten zu einer hohen Oberflächengüte und zu engen Toleranzen führt. Das Drehräumen ist eine Kombination aus Drehen und Räumen und die zum Zerspanen erforderliche Schneidbewegung setzt sich aus einer Rotation des Werkstückes und einer Translation des Werkzeuges zusammen, wobei das Werkzeug meist eine geradlinige Vorschubbewegung quer zur Werkstückdrehachse ausführt. Auf Grund der Notwendigkeit, das Werkstück für die Bearbeitung jeweils um die Achse des Bearbeitungsquerschnittes drehend anzutreiben, ergeben sich recht ungünstige Abstützbedingungen, vor allem bei Werkstücken mit exzentrischen Querschnitten, wie Kurbelwellen, die praktisch nur an den Enden gespannt werden können. Die fehlende Abstützung im Längsmittenbereich des Werkstückes bringt durch auftretende Vibrationen Beeinträchtigungen der Bearbeitungsqualität mit sich, wozu noch kommt, daß zur Bearbeitung der exzentrischen Querschnitte das Werkstück außermittig zu spannen ist, was von vornherein eine zusätzliche Werkstückabstützung ausschließt. Darüber hinaus erfordert die Bearbeitung exzentrischer Querschnitte, beispielsweise der Hubzapfen einer Kurbelwelle, ein Umspannen des Werkstückes, wodurch Spannungsungenauigkeiten entstehen, die sich auf die Lagetoleranzen der Hubzapfen auswirken. Die Vibrationsgefahr des Werkstückes erzwingt außerdem eine Begrenzung der Werkstückdrehzahl und damit eine Begrenzung der Schnittgeschwindigkeit, so daß die neu entwickelten, auf immer höhere Schnittgeschwindigkeit hin ausgelegten Schneidstoffe für das Drehräumen nicht optimal nutzbar sind. Das bekannte Drehräumen verlangt weiters zu seiner Durchführung verhältnismäßig aufwendige maschinelle Einrichtungen, die aber auf ein bestimmtes Werkstück abgestimmt sind und nur umständlich und langwierig umgerüstet werden können, so daß die heute auch in der Massenfertigung bestehenden Anforderungen an Umstellmöglichkeiten, um beispielsweise Kurbelwellenfamilien, also Kurbelwellen mit verschiedener Hubzahl, in einer Linie fertigen zu können, nicht erfüllbar sind.

Der Erfindung liegt daher die Aufgabe zugrunde, diese Mängel zu beseitigen und ein Räumverfahren der eingangs geschilderten Art anzugeben, das eine feste, stabile Werkstückabstützung erlaubt, eine Steigerung der Schnittgeschwindigkeiten gewährleistet und sich rationell an unterschiedliche Fertigungsprogramme anpassen läßt. Außerdem soll eine verhältnismäßig aufwandsarme Räummaschine zum Durchführen dieses Verfahrens geschaffen werden.

Die Erfindung löst diese Aufgabe dadurch, daß wenigstens ein Räumwerkzeug einem zum Bearbeitungsquerschnitt tangential gerichteten Vorschub unterworfen und gleichzeitig auf einer zum Bearbeitungsquerschnitt konzentrischen Kreisbahn um das stillstehend gehaltene Werkstück herumbewegt wird. Dadurch führt das Werkzeug selbst sowohl die Vorschubbewegung als auch die Schnittbewegung aus und das stillgehaltene Werkstück kann an beliebiger Stelle gespannt und abgestützt werden, wozu nicht nur Spannstöcke, sondern auch zentrierende oder kompensierende Lünetten eingesetzt werden können. Diese stabile, in Bearbeitungsnähe liegende Abstützung verhindert das Entstehen von Vibrationen genauso wie ein Durchbiegen des Werkstückes, so daß höchste Bearbeitungsgenauigkeiten erreichbar sind. Da das Werkzeug zur Rundbearbeitung lediglich auf die Mitte des Bearbeitungsquerschnittes positioniert zu werden braucht, ist ein Umspannen des Werkstückes unnötig und engste Toleranzen sind einzuhalten. Die Schnittgeschwindigkeit wird außerdem von der Werkzeugdrehzahl bestimmt und nicht von der Werkstückumdrehung, so daß nicht mehr die Unwucht-und Schwingungs erscheinungen des Werkstückes, sondern die Lagerbedingungen des Werkzeuges die Grenzdrehzahl beeinflussen und daher auch wunschgemäß mit entsprechend hohen Schnittgeschwindigkeiten gearbeitet werden kann. Durch die Möglichkeit, jeden Bearbeitungsquerschnitt für sich zu bearbeiten, können auch mehrere Querschnitte gleichzeitig bearbeitet werden und eine Bearbeitung nach verschiedenen Programmen bereitet ebenfalls keinerlei Schwierigkeit, was die angestrebte Flexibilität der Anwendung mit sich bringt.

Zur einfachen und geschickten Durchführung des Verfahrens eignet sich eine Räummaschine mit einem Maschinenbett, auf dem zwei Spannstöcke für das Werkstück und wenigstens ein Räumschlitten für das Werkzeug sitzen, wenn erfindungsgemäß der Räumschlitten eine dreh-und antreibbare, das Werkstück umschließende Werkzeugtrommel aufweist, an der zumindest ein Räumwerkzeug vorschubgerecht antreibbar angeordnet und geführt ist, wobei die Werkzeugtrommel und die Spannfutter der Spannstöcke relativ zueinander quer-und vorzugsweise längsverschiebbar lagern. Zum Räumen braucht daher die Werkzeugtrommel nur durch entsprechendes Verschieben des Räumschlittens in bezug auf den Bearbeitungsquerschnitt längspositioniert und zentriert zu werden, worauf eine Drehbewegung der Trommel bei gleichzeitigem Tangentialvorschub des Räumwerkzeuges die gewünschte Bearbeitung mit sich bringt. Die Relativverschiebung zwischen Werkzeugtrommel und Werkstück läßt sich durch ein Verschieben der Spannstöcke bzw. der Spannfutter und/oder des Räumschlittens erreichen, wobei das stillstehend gehaltene Werkstück an jeder geeigneten Stelle eine zusätzliche Unterstützung durch Lünetten od. dgl. erlaubt. Eine in ihrem Bau-und Konstruktionsaufwand mit einer Innenfräsmaschine vergleichbare "Innenräummaschine" gewährleistet daher die optimale Nutzung der Vorteile des Drehräumverfahrens, ohne dessen Nachteile in Kauf nehmen zu müssen.

Nach einer vorteilhaften Ausgestaltung der Erfindung nimmt die Werkzeugtrommel drei Räumwerkzeuge auf, die in Richtung der Seiten eines in einer Achsnormalebene liegenden gleichseitigen Dreieckes geführt sind. Diese drei Räumwerkzeuge stützen sich gewissermaßen bei der Bearbeitung gegenseitig ab, was eine Kompensierung der auf das Werkstück wirkenden Schnittkräfte bedeutet. Sie erlauben durch die Aufteilung der Gesamtzahl der Schneiden auf drei Werkzeuge eine entsprechende Verkürzung der Werkzeuglängen und damit eine Verringerung der Maschinengröße. Die drei Werkzeuge lassen sich darüber hinaus günstig einander zuordnen, so daß sie beim Zurückziehen aus der Arbeitsstellung den lichten Querschnitt der Werkzeugtrommel weitgehend frei machen und dadurch das einfache Positionieren der Werkzeuge ermöglichen.

Eine kompakte Konstruktion ergibt sich weiters, wenn erfindungsgemäß die Werkzeugtrommel ein Räumwerkzeugpaar aus zwei gegengleich geführten Räumwerkzeugen aufnimmt, wobei das Werkzeugpaar gut geführt und abgestützt werden kann und auch einfach für einen synchronen Vorschubantrieb zu sorgen ist.

In der Zeichnung ist der Erfindungsgegenstand rein schematisch veranschaulicht, und zwar zeigen

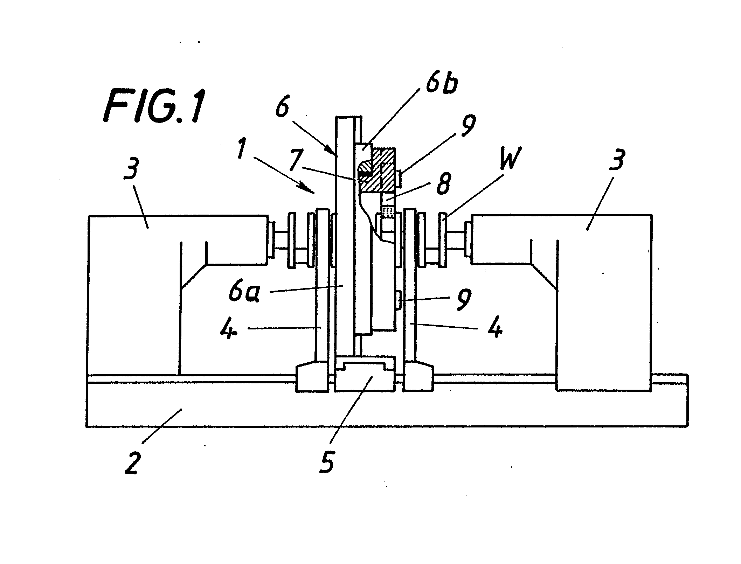

Fig. 1 eine erfindungsgemäße Räummaschine in teilgeschnittener Seitenansicht,

Fig. 2 die Werkzeugtrommel mit den Räumwerkzeugen des zugehörigen Räumschlittens in Stirnansicht größeren Maßstabes und

Fig. 3 ein anderes Beispiel einer Werkzeugtrommel ebenfalls in Stirnansicht.

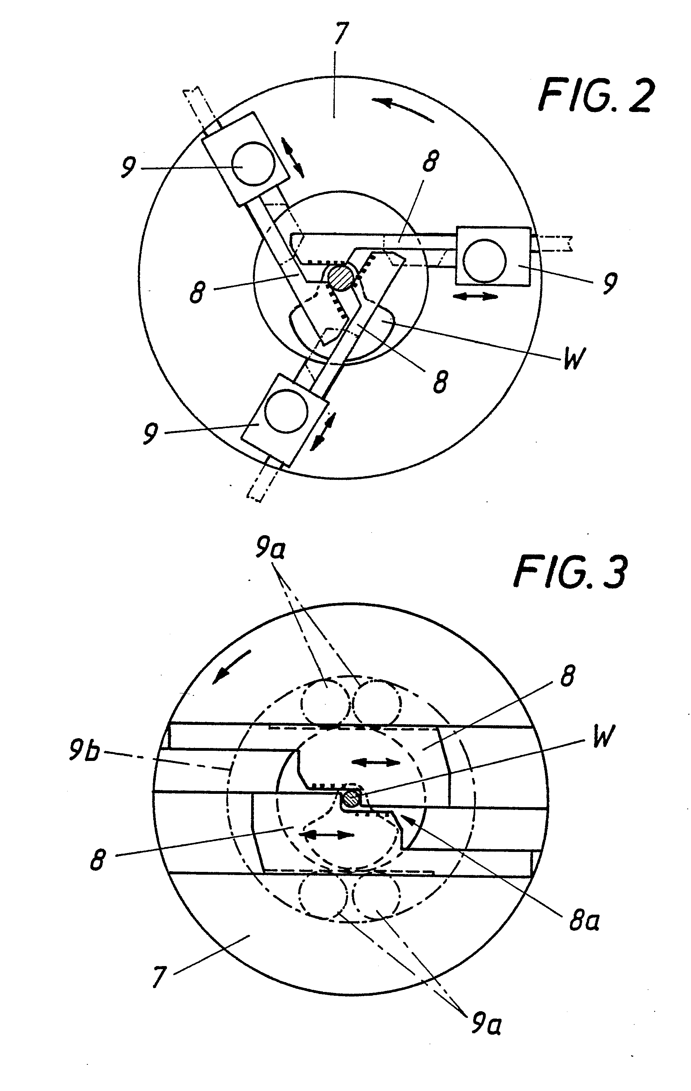

Um Kurbelwellen oder andere wellenförmige Werkstücke W rationell durch Räumen rundbearbeiten zu können, ist eine Innenräummaschine 1 mit einem Maschinenbett 2 vorgesehen, auf dem zwei zwischen sich das Werkstück W aufnehmende Spannstöcke 3, zwei das Werkzeug W zusätzlich abstützende Lünetten 4 sowie ein auf dem Maschinenbett 2 verschiebbarer Längsschlitten 5 sitzen. Der Längsschlitten 5 trägt einen Räumschlitten 6, der sich in Art eines Kreuzschlittens aus einem Querschlitten 6a und einem Hochschlitten 6b zusammensetzt. Im Räumschlitten 6 ist eine dreh-und in nicht weiter dargestellter Weise antreibbare Werkzeugtrommel 7 gelagert, die das Werkstück W umschließt und stirnseitig mit den Räumwerkzeugen 8 bestückt ist. Gemäß dem Ausführungsbeispiel nach Fig. 2 gibt es drei Räumwerkzeuge 8, die in einer gemeinsamen Achsnormalebene liegen und in Richtung der Seiten eines gleichseitigen Dreieckes geführt sind, wobei Antriebe 9 für eine vorschubgerechte, geradlinige Hubbewegung der Räumwerkzeuge 8 sorgen. Diese Antriebe 9 können, wie angedeutet, als elektrische Antriebe mit einer Schleifringversorgung ausgebildet sein, es können aber auch vom Werkzeugtrommelantrieb abgenommene mechanische Überlagerungstriebe, hydraulische Antriebe mit Speicher und drahtloser Ansteuerung od.dgl. Verwendung finden.

Gemäß dem in Fig. 3 veranschaulichten Beispiel läßt sich die Werkzeugtrommel 7 in kompakter Bauweise auch mit einem Räumwerkzeugpaar 8a aus zwei gegengleich geführten Werkzeugen 8 bestücken, die zweckmäßig über Ritzel 9a und einen nur angedeuteten Innenzahnkranz 9b eines Überlagerungstriebes vorschubgerecht gegensinnig hin-und herbewegt werden können.

Durch die Drehung der die Räumwerkzeuge 8 aufnehmenden Werkzeugtrommel 7 und die Hubbewegung der Räumwerkzeuge 8 relativ zur Werkzeugtrommel 7 läßt sich ein Räumverfahren bei stillstehend gespanntem Werkstück W verwirklichen und damit die Vorteile des Drehräumens, wie kurze Bearbeitungszeiten und hohe Fertigungsgenauigkeit, mit den Vorteilen einer Bearbeitung stillstehender Werkstücke, wie gute Abstützungsmöglichkeiten, hohe Schnittgeschwindigkeiten, Mehrfachbearbeitungen u. dgl., vereinen. Dazu kommt noch, daß der maschinelle Aufwand zur Durchführung dieses Räumverfahrens verhältnismäßig gering bleibt und etwa mit Innenfräsmaschinen vergleichbare Innenräummaschinen eingesetzt werden können. Es ist möglich, ein oder mehrere Räumschlitten mit jeweils ein oder mehreren Räumwerkzeugen zu verwenden, das Werkstück nicht nur endseitig, sondern zusätzlich an ein oder mehreren Stellen zu spannen und das Bearbeitungsverfahren schnell und problemlos an unterschiedliche Werkstücke und Arbeitsprogramme anzupassen. Ein Zurückziehen der Räumwerkzeuge in eine Ausgangsstellung (strichpunktierte Darstellung in Fig.2 und 3) öffnet das Innere der Werkzeugtrommel 7 und gewährleistet ein rasches Längspositionieren der Räumwerkzeuge. Das Beladen der Maschine erfolgt durch ein Positionieren der Werkzeuge 8 über den Spannfuttern der Spannstöcke 3 und ein vertikales Werkstückeinlegen oder durch ein axiales Einführen des Werkstückes W durch die Werkzeugtrommel 7. Ein frisch eingespanntes Werkstück kann auf beliebige Weise und in unterschiedlicher Reihenfolge der Querschnitte bearbeitet werden, wobei es durchaus möglich ist, Hub- und Lagerzapfen einer Kurbelwelle in einer Aufspannung nach einander und bei Vorhandensein von zwei oder mehreren Räumschlitten auch gleichzeitig zu bearbeiten, da zur Bearbeitung der positionierte Räumschlitten 6 mit seiner Werkzeugtrommel 7 nur koaxial zum Bearbeitungsquerschnitt gebracht zu werden braucht, was durch die Ausbildung des Räumschlittens 6 als Kreuzschlitten für alle Bearbeitungsquerschnitte einfach zu erreichen ist, und durch Drehung der Werkzeugtrommel 7 und gleichzeitigen Vorschub der Räumwerkzeuge 8 kommt es zur gewünschten Räumbearbeitung jedes beliebigen Querschnittes.

**Ansprüche**

1. Räumverfahren zur spanenden Rundbearbeitung rotationssymmetrischer Querschnitte, dadurch gekennzeichnet, daß wenigstens ein Räumwerkzeug (8) einem zum Bearbeitungsquerschnitt tangential gerichteten Vorschub unterworfen und gleichzeitig auf einer zum Bearbeitungsquerschnitt konzentrischen Kreisbahn um das stillstehend gehaltene Werkstück (W) herumbewegt wird.

2. Räummaschine zum Durchführen des Verfahrens nach Anspruch 1, mit einem Maschinenbett (2), auf dem zwei Spannstöcke (3) für das Werkstück (W) und wenigstens ein Räumschlitten (6) für das Werkzeug (8) sitzen, dadurch gekennzeichnet, daß der Räumschlitten (6) eine dreh-und antreibbare, das Werkstück (W) umschließende Werkzeugtrommel (7) aufweist, an der zumindest ein Räumwerkzeug (8) vorschubgerecht antreibbar angeordnet und geführt ist, wobei die Werkzeugtrommel (7) und die Spannfutter der Spannstöcke (3) relativ zueinander quer-und vorzugsweise längsverschiebbar lagern.

3. Räummaschine nach Anspruch 2, dadurch gekennzeichnet, daß die Werkzeugtrommel (7) drei Räumwerkzeuge (8) aufnimmt, die in Richtung der Seiten eines in einer Achsnormalebene liegenden gleichseitigen Dreieckes geführt sind.

4. Räummaschine nach Anspruch 2, dadurch gekennzeichnet, daß die Werkzeugtrommel (7) ein Räumwerkzeugpaar (8a) aus zwei gegengleich geführten Räumwerkzeugen (8) aufnimmt.

# FIG.1

*FIG. 2*

7

9

8

8

8

W

8

9

9

*FIG. 3*

9a

8

9b

W

8

8a

7

9a

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 242 578 (FLOETER)<br>* Seite 1, rechte Spalte, Zeilen 46-50; Figuren 1-3 *<br><br>----- | 1,4 | B 23 D 37/00 |

**RECHERCHIERTE SACHGEBIETE (Int. Cl.4)**

B 23 D 37/00
B 23 D 39/00
B 23 D 41/00
B 23 D 43/00

Der vorliegende Recherchenbericht wurde für alle Patentansprüche erstellt.

| Recherchenort | Abschlußdatum der Recherche | Prüfer |
|---|---|---|
| DEN HAAG | 19-06-1987 | BOGAERT F.L. |

EPA Form 1503 03 82